# EUROPÄISCHE PATENTANMELDUNG

(11) **EP 4 464 555 A1**
(43) Veröffentlichungstag der Anmeldung: **20.11.2024**
(21) Anmeldenummer: 24176008.1
(22) Anmeldetag: 15.05.2024
(51) Int. Cl.: B60P 1/00, B60P 1/28, B60P 1/36

(54) **FAHRZEUG MIT KONISCHEM LADERAUM**

(30) Priorität: 16.05.2023 DE 102023112861
(71) Anmelder: B. Strautmann & Söhne GmbH u. Co. KG, 49196 Bad Laer (DE)
(72) Erfinder: Oelgeschläger, Oliver, 49163 Bohmte (DE); Strautmann, Wolfgang, 49196 Bad Laer (DE)
(74) Vertreter: Dr. Träger & Strautmann PAe PartG mbB

(57) **Zusammenfassung**

Die Erfindung betrifft ein Fahrzeug (100) mit einem Laderaum (10), wobei der Laderaum (10) zur Aufnahme von Schüttgut oder Biomasse vorgesehen ist, umfassend:
- einen Boden (14), eine Vorderwand (13), zwei Seitenwände (11, 12) sowie eine heckseitige Öffnung (16) und
- eine an der heckseitigen Öffnung (16) angebrachte Klappe oder Funktionseinheit (20) zur Ausbringung des Schüttguts oder der Biomasse.

Als Stand der Technik sind Fahrzeuge (100) mit einem konischen Laderäumen bekannt, bei denen die Seitenwände (11, 12) in einer horizontalen Richtung (RH) schräg gestellt sind und somit die genannte Konizität ausbilden. Ein Nachteil solcher konischer Laderäume ist, dass die sich an den Laderaum anschließenden Bauteile an die Konizität des Laderaums angepasst werden müssen.

Um das Entladen zu erleichtern und die Fertigung, Montage und Lagerhaltung zu vereinfachen wird vorgeschlagen, dass der Laderaum (10) in vertikaler Richtung (RH) gesehen einen unteren Ladungsbereich (W) und einen an den unteren Ladungsbereich (W) anschließenden ersten mittleren Ladungsbereich (X) umfasst und der erste mittlere Ladungsbereich (X) sich zum unteren Ladungsbereich (W) von einer ersten Breite (47, 47', 47") zu einer zweiten Breite (48) erweitert, so dass die erste Breite (47, 47', 47") für in den Laderaum (10) eingefülltes Ladegut eine Engstelle bildet, nach deren Passieren das Ladegut in den auf die zweite Breite (48) erweiterten Bereich (W) gelangt.

## Beschreibung

Die Erfindung betrifft ein Fahrzeug mit einem Laderaum nach dem Oberbegriff des Anspruchs 1.

Der Laderaum des Fahrzeuges ist zur Aufnahme von Schüttgut oder Biomasse vorgesehen und umfasst:
- einen Boden, eine Vorderwand, zwei Seitenwände sowie eine heckseitige Öffnung und
- eine an der heckseitigen Öffnung angebrachte Klappe oder Funktionseinheit zur Ausbringung des Schüttguts oder der Biomasse.

Bei Fahrzeugen mit Laderaum erfolgt das Entladen häufig entweder, indem der Laderaum einseitig angehoben und die Ladung abgekippt wird oder indem eine im Laderaum angeordnete Fördervorrichtung die Ladung in Richtung Entladeöffnung und durch diese hindurch transportiert. Eine solche Fördereinrichtung kann beispielsweise ein den Boden des Laderaums umlaufendes Förderband oder ein Kratzboden sein.

Um die beim Entladen die vom Ladegut auf die Seitenwände ausgeübte Reibung zu reduzieren ist es bekannt, den Laderaum in Entladerichtung konisch auszuführen, indem die Seitenwände des Laderaums schräg ausgerichtet werden. Hierdurch ergibt sich eine Erweiterung, die das Entladen insgesamt vereinfacht.

Ein auf diese Weise konisch ausgeführter Laderaum hat jedoch über die Länge des Laderaums gesehen unterschiedliche Abmessungen hinsichtlich seiner Breite. Bei der Anbindung des Laderaums an den Fahrzeugrahmen oder auch bei einem eventuellen Anbau zusätzlicher Laderaum-Aufsätze müssen die entsprechenden Bauteile an den konischen Laderaum angepasst werden. Beispielsweise kann es vorkommen, dass die Länge von zur Stabilisierung vorgesehenen Querträgern an die jeweilige Breite des konischen Laderaums angepasst werden muss. Es werden folglich keine einheitlich langen, sondern unterschiedlich lange Querträger benötigt. Hierdurch reduziert sich die Anzahl der Gleichteile und die Kosten erhöhen sich.

Weiterhin tritt bei Laderäumen, die mittels einer umlaufenden Fördereinrichtung entleert werden, das Problem auf, dass diese umlaufenden Fördereinrichtungen nicht konisch ausgeführt werden können, sondern vielmehr über die gesamte Förderlänge eine einheitliche Breite aufweisen. Als Konsequenz hieraus ergibt sich, dass bei Einsatz einer umlaufenden Fördervorrichtung in einem konischen Laderaum keilförmige Eckbereiche entstehen, die beim Entladen von der Fördereinrichtung nicht erreicht werden.

Aufgabe der Erfindung ist es, die beschriebenen Nachteile zu beseitigen und ein Fahrzeug mit einem Laderaum vorzuschlagen, der sich mit geringem Kraftbedarf entladen und sich kostengünstig herstellen und montieren lässt.

Diese Aufgabe wird gelöst durch ein Fahrzeug mit den Merkmalen des Anspruchs 1.

### Definitionen:

Unter einer konischen Erweiterung wird eine vorzugsweise gleichförmige Erweiterung eines Bauteils oder einer Baugruppe verstanden, wobei sich wenigstens eine Abmessung von einer ersten Weite oder Breite zu einer zweiten Weite oder Breite vergrößert.

Unter einer Oberkante einer Seitenwand wird ein oberer Abschluss der Seitenwand verstanden. Der obere Abschluss ist vorzugweise durch ein Abschlussprofil ausgebildet, welches eine zum Laderaum gerichtete obere Innenkante und eine nach außen gerichtete obere Außenkante umfasst. Das obere Abschlussprofil ist vorzugsweise durch Abkanten des Wandungsbleches ausgebildet, kann aber auch anders, beispielweise durch Anmontieren oder Anschweißen eines Zusatzteiles hergestellt sein. Zwischen der oberen Innenkante und der oberen Außenkante der Seitenwand ist eine vorzugsweise horizontal ausgerichtete Auflagefläche ausgebildet.

Unter einer Unterkante einer Seitenwand wird eine untere Abschlusskante eines Seitenwand-Wandungsbleches verstanden. Ein solches Wandungsblech weist üblicherweise eine Blechstärke von 2mm bis 5mm auf. Üblicherweise ist an der Unterkante des Seitenwand-Wandungsbleches kein Abschlussprofil vorgesehen. Es ist jedoch nicht ausgeschlossen, die Unterkante des Wandungsbleches analog zur Oberkante der Seitenwand mit einem Abschlussprofil auszustatten.

Unter einer horizontalen Konizität wird eine konische Erweiterung in horizontaler Richtung verstanden.

Unter einer vertikalen Konizität wird eine konische Erweiterung in vertikaler Richtung verstanden.

Unter einer Transporteinrichtung wird eine Einrichtung zum Transport von im Laderaum eines Fahrzeuges enthaltenem Ladegut verstanden. Eine Transporteinrichtung kann beispielsweise ein um den Boden des Laderaums umlaufendes Förderband oder ein sogenannter Kratzboden sein. Ein Kratzboden umfasst in der Regel zwei Kettenstränge, die jeweils von auf Wellen gelagerten Kettenrädern oder Taschenrädern bewegt werden. Auf den Ketten sind in regelmäßigen Abständen Mitnehmerleisten zur Beförderung des Ladeguts angebracht. Eine Transporteinrichtung kann aber auch eine hydraulisch angetriebene Schiebewand oder ein Schiebeboden sein.

Das erfindungsgemäße Fahrzeug umfasst einen Laderaum zur Aufnahme von Schüttgut oder Biomasse. Der Laderaum umfasst einen Boden, eine Vorderwand, zwei Seitenwände sowie eine heckseitige Öffnung. An der heckseitigen Öffnung ist eine Klappe oder Funktionseinheit zur Ausbringung des Schüttguts oder der Biomasse angebracht. Der Laderaum umfasst in vertikaler Richtung gesehen wenigstens zwei übereinander angeordnete Ladungsbereiche.

Der dem Fahrzeugboden nächstliegende Ladungsbereich wird nachfolgend als unterster Ladungsbereich bezeichnet. Dementsprechend wird der dem Fahrzeugboden fernstliegende Ladungsbereich als oberster Ladungsbereich bezeichnet. Zwischen dem untersten und dem obersten Ladungsbereich können weitere Ladungsbereiche vorgesehen sein. Diese werden, von unten nach oben gezählt als erster mittlerer Ladungsbereich und zweiter mittlerer Ladungsbereich bezeichnet. Die genannten Ladungsbereiche weisen im für die Ladung vorgesehenen Bereich keine körperlichen Trennebenen auf, sondern werden lediglich dadurch ausgebildet bzw. definiert, dass im Bereich der Seitenwände vorzugsweise von der einen Seitenwand zur anderen Seitenwand parallel zueinander angeordnete Abstufungen oder Kantungen vorgesehen sind. Werden diese Abstufungen oder Kantungen virtuell miteinander verbunden, ergeben sich die genannten Ladungsbereiche.

Der unterste, also der bodennächste Ladungsbereich, weist ein größeres Breitenmaß auf, als der darüber benachbart angeordnete Ladungsbereich. Hierdurch ergibt sich oberhalb des untersten Ladungsbereichs eine Engstelle, oder umgekehrt gesagt: unterhalb des engeren Ladungsbereiches ergibt sich eine Verbreiterung, die dafür sorgt, dass ein als Ladegut eingefülltes Schüttgut, insbesondere eingefüllte Biomasse wie Düngemittel oder Erntegut, sich in gewissem Umfang entspannen kann. Im Ergebnis reduziert sich hierdurch der Druck, der vom Ladegut insgesamt auf den Fahrzeugboden und/oder auf eine den Fahrzeugboden umlaufende Fördereinrichtung ausgeübt wird. Vereinfacht gesagt ist der Laderaum im Bereich des Fahrzeugbodens breiter als in einem Bereich darüber. Hierdurch ergibt sich dann, wenn es sich bei dem Ladegut um Schüttgut oder Biomasse, wie beispielsweise Erntegut oder Düngemittel, handelt, der Vorteil, dass das im Laderaum befindliche Gut bei Transportfahrten oder auch bei längeren Standzeiten durch das Eigengewicht im unteren Bereich weniger stark komprimiert wird. So eine Kompression des Ladeguts kann sich bei der Entladung negativ auswirken. Beispielweise kann die Kompression dazu führen, dass das Ladegut sich im Laderaum festsetzt. Bei einem Fahrzeug mit Kippvorrichtung wird hierdurch das Abkippen erschwert oder sogar verhindert. Bei einem Fahrzeug mit einer den Boden umlaufenden Fördereinrichtung besteht die Gefahr, dass die Fördereinrichtung entweder blockiert oder ohne Ladegut-Mitnahme unter dem Ladegut hindurchgezogen werden kann. Der im untersten Ladungsbereich zur Verfügung gestellte zusätzliche Freiraum bewirkt somit eine Reduktion der Nachverdichtung und verhindert ein Festklemmen oder Blockieren des Ladeguts im Laderaum.

Vorzugsweise erstrecken sich die Seitenwände in horizontaler Richtung in einem an den Boden des Fahrzeuges angrenzenden Bereich parallel zueinander. Dies ist insbesondere dann von Vorteil, wenn das Fahrzeug eine den Boden umlaufende Fördereinrichtung umfasst. Bei sich parallel erstreckenden Seitenwänden, bzw. unteren Seitenwandbereichen, ist der Abstand der Seitenwände über die Länge des Laderaums konstant. Da eine den Boden umlaufende Fördereinrichtung, beispielweise ein Kratzboden oder ein Förderband, grundsätzlich eine konstante Arbeitsbreite aufweist, ergibt sich hieraus als Konsequenz, dass auch der Abstand zwischen den Außenseiten der Fördereinrichtung und den Seitenwänden über die Länge des Laderaums konstant ist. Im Gegensatz zu sich in Fahrzeugbodennähe in Richtung Entladeöffnung konisch erweiternden Seitenwänden bzw. sich konisch erweiterndem Laderaum ergeben sich somit bei parallelen unteren Seitenwandbereichen im Bereich des Fahrzeugbodens keine keilförmigen Bereiche, die von der den Boden umlaufenden Förderreinrichtung nicht überstrichen werden und ein vollständiges Entladen des Laderaums erschweren. Dabei ist es ausreichend, wenn in vertikaler Richtung gesehen die Seitenwände lediglich in einem kleinen Bereich, nämlich in dem direkt an den Fahrzeugboden anschließenden Bereich, parallel zueinander ausgerichtet sind.

In einer bevorzugten Ausführungsform kann der Laderaum oberhalb des untersten Ladungsbereiches einen weiteren Ladungsbereich umfassen, der in vertikaler Richtung konisch ausgeführt ist. Bei diesem Ladungsbereich kann es sich um den unmittelbar an den untersten Ladungsbereich angrenzenden oder um einen weiteren, oberhalb des angrenzenden Ladungsbereiches angeordneten Ladungsbereich handeln. Beispielsweise kann ein vertikal konischer Übergangsbereich zwischen einem mittleren und dem unteren Ladungsbereich vorgesehen sein. Vorzugsweise ist dieser Ladungsbereich an seiner Unterseite schmaler und an seiner Oberseite breiter, so dass der Laderaum sich durch diese Konizität von unten nach oben vergrößert bzw. aufgeweitet wird. Die durch die Aufweitung ausgebildete Vergrößerung erhöht die Ladungskapazität.

Alternativ oder ergänzend kann der Laderaum auch in seinem obersten Ladungsbereich eine sich in Richtung Laderaum-Oberseite erweiternde Konizität aufweisen. Auch hierdurch wird die Ladekapazität erhöht. Zudem wird die obere Öffnung, die für die Befüllung des Laderaums mit Ladegut vorgesehen ist, vergrößert und damit die Befüllung des Laderaums erleichtert.

Vorzugsweise kann vorgesehen sein, dass sich zumindest einer der Ladungsbereiche in horizontaler Richtung gesehen zu einer zur Entladung am Fahrzeug vorgesehenen Öffnung konisch erweitert. Der konische Bereich kann beispielsweise in einem mittleren Bereich des Laderaums angeordnet sein. Dieser Ladungsbereich bewirkt somit eine Reduktion des Reibwiderstandes zwischen dem Ladegut und den Seitenwänden beim Abkippen und/oder beim Transport des Ladeguts mittels einer den Boden umlaufenden Fördereinrichtung. Dabei ist es in vielen Anwendungsfällen ausreichend, wenn die genannte konische Erweiterung in horizontaler Richtung sich nicht über die gesamten Seitenwände, sondern nur über einen Teilbereich dieser Seitenwände erstreckt.

Der Laderaum ist somit insgesamt nicht quaderförmig mit in vertikaler Richtung über den gesamten Laderaum konstantem Breitenmaß ausgebildet, sondern weist unterschiedliche Bereiche auf. Diese unterschiedlichen Bereiche optimieren in Abhängigkeit vom vorgesehenen Einsatzzweck Parameter wie die Laderaumkapazität, die Leichtzügigkeit beim Entladen, den zur Ausbildung des Laderaums erforderlichen Materialeinsatz, die Montage- und Nachrüstfreundlichkeit und die Ästhetik insgesamt.

Die unterschiedliche Gestaltung des Laderaums wird realisiert durch eine entsprechende Konturierung der Seitenwände. Die Konturierung der Seitenwände kann durch Zusammenfügen von einzelnen Flächenelementen realisiert werden. Vorzugsweise erfolgt die Konturierung jedoch durch geschicktes Kanten großformatiger Blechtafeln. Durch das Kanten entstehen somit aus ebenen Tafeln dreidimensionale Seitenwände, die im montierten Zustand einen Fahrzeug-Laderaum mit unterschiedlichen Ladungsbereichen ausbilden.

Vereinfacht gesagt ist der Laderaum somit schichtweise aufgebaut, wobei die übereinander angeordneten Schichten in vertikaler Richtung gesehen ineinander übergehen. Die hinsichtlich ihrer geometrischen Ausführung unterschiedlichen Ladungsbereiche grenzen vereinfacht gesagt virtuell, also ohne körperliche Trennbleche oder dergleichen, aneinander an. Die schichtweise Gestaltung ermöglicht eine montagefreundliche, beim Entladen widerstandsarme und hinsichtlich der Ladekapazität möglichst voluminöse Konzeption des Laderaums durch entsprechende Anpassungen der Seitenwände.

Wenigstens ein Ladungsbereich kann in vertikaler Richtung und wenigstens ein Ladungsbereich in horizontaler Richtung konisch ausgebildet sein. Wesentlich bei einem solchen Ausführungsbeispiel ist somit, dass nicht alle Ladungsbereiche in horizontaler und vertikaler Richtung gleich ausgebildet sind, sondern dass unterschiedliche Bereiche mit unterschiedlichen Konizitäten vorgesehen sind. Hierdurch lassen sich die Ladungsbereiche je nach Anwendungsfall bzw. Ausführungsbeispiel anforderungsgerecht miteinander kombinieren.

Besonders bevorzugt ist, dass wenigstens ein Ladungsbereich sowohl in horizontaler Richtung als auch in vertikaler Richtung konisch ausgebildet ist. Die doppelte Konizität dieses Ladungsbereiches ermöglicht die Optimierung des Laderaumvolumens bei gleichzeitiger Reibwiderstandsreduktion in diesem Bereich.

Realisiert werden die genannten Konizitäten durch die Seitenwände, genauer gesagt durch die Aneinanderreihung unterschiedlich ausgerichteter Flächenelemente. Bei dem erfindungsgemäßen Fahrzeug umfasst vorzugsweise nicht nur eine, sondern beide Seitenwände einen in horizontaler Richtung konisch ausgebildeten Bereich. Die Seitenwände weisen eine untere und/oder eine obere Kante auf, wobei - trotz Konizität in horizontaler Richtung - wenigstens eine der Kanten parallel zur Mittellinie des Laderaum verläuft. Die konisch angeordneten Bereiche der beiden Seitenwände sind im montierten Zustand des Laderaums vorzugsweise spiegelsymmetrisch zueinander angeordnet und bilden gemeinsam eine sich in Richtung Fahrzeugheck erstreckende konische Erweiterung des Laderaums aus.

Die konische Erweiterung wird jedoch im Gegensatz zu den als Stand der Technik bekannten Lösungen nicht durch ein Schrägstellen der Laderaum-Seitenwände erreicht, sondern durch eine Umformung der Seitenwand. Diese Umformung ist vorgesehen in einem Bereich zwischen der oberen und der unteren Kante der Seitenwand, so dass im montierten Zustand die untere Kante, die obere Innenkante oder die oberer Außenkante oder mehrere der genannten Kanten eine zur Mittellinie des Fahrzeuges parallele Ausrichtung aufweisen.

Die in die Seitenwand integrierte horizontale Konizität reduziert den Widerstand und die Reibung, die vom Ladegut auf die Seitenwände des Laderaums ausgeübt wird. Das gilt sowohl für Fahrzeuge mit Transporteinrichtung, bei denen das Ladegut mittels einer Transporteinrichtung gefördert wird, als auch für Kipper, bei denen das Ladegut durch Kippen des Laderaums gefördert wird. Gleiches gilt im Übrigen auch, wenn der Laderaum als Transporteinrichtung keinen Transportboden umfasst, sondern einen sogenannten Schub- oder Schiebeboden oder ein hydraulisch angetriebenes Abschiebesystem. Bei einem Abschiebesystem wird das Ladegut mittels einer vorzugsweise hydraulisch angetriebenen Frontwand in Richtung Fahrzeugheck geschoben.

Da wenigstens eine untere Kante und/oder eine obere Außen- oder Innenkante parallel zur Mittelinie des Fahrzeuges verläuft, müssen etwaige sich an die Seitenwände anschließende Teile nicht an die Konizität des Laderaums angepasst werden. Sind beispielsweise in einem Bereich zwischen Vorderwand und Hecköffnung fünf Träger vorgesehen, auf denen der Laderaum gelagert ist, so können alle Träger mit einer gleichen Länge gefertigt werden ohne dass sie im montierten Zustand den Laderaum überragen oder nur unvollständig abzustützen.

Zudem bilden sich bei dem als Stand der Technik bekannten Laderaum mit schräg ausgerichteten Seitenwänden zwei keilförmige Dreiecke aus, bei denen die Länge der Seitenwand der Hypotenuse der genannten Dreiecks entspricht. Umfasst das Produktionsprogramm eines Herstellers konische und nicht-konische Laderäume weisen die für die jeweiligen Laderäume verwendeten Seitenwände deshalb unterschiedliche Längen auf. Da zur Vergrößerung des Ladevolumens häufig Aufsätze bzw. Aufsatz-Seitenwände vorgesehen sind, können deshalb bei dem als Stand der Technik bekannten Laderaum mit schräg gestellten Seitenwänden nicht die gleichen Aufsätze verwendet werden, wie bei einem Fahrzeug mit nicht-konischem Laderaum. Als Konsequenz hieraus müssen im geschilderten Beispiel herstellerseits somit unterschiedlich lange Aufsatz-Seitenwände konzipiert, disponiert und bevorratet werden. Dahingegen können dann, wenn die Konizität in die Seitenwand integriert ist und an der Seitenwand eine zur Mittellinie parallele obere Außen- und/oder Innenkante vorgesehen ist, gleich lange Aufsatz-Seitenwände verwendet werden.

Die Vereinheitlichung von Teilen und die damit einhergehende Reduktion der Anzahl unterschiedlicher Teile erleichtert Disposition und Logistik und reduziert Fertigungs- und Lagerungskosten.

Selbstverständlich ist es auch möglich, lediglich eine Kante einer Seitenwand, also entweder die untere Kante obere oder die obere Außenkante oder obere Innenkante, parallel zur Mittellinie auszubilden. Insbesondere dann, wenn es sich bei dem Fahrzeug um ein Fahrzeug mit einem in den Laderaum integrierten Fördersystem, beispielsweise einem umlaufenden Kratzboden, handelt, ermöglicht eine zur Mittellinie parallele untere Kante, dass der umlaufende Förderboden von der Frontwand bis zum Fahrzeugheck den gleichen, möglichst schmalen Abstand zur Seitenwand aufweist. Dahingehend besteht bei einer Seitenwand, deren untere Kante sich in Richtung Fahrzeugheck konisch erweitert, die Gefahr, dass im Bereich des Fahrzeughecks der Abstand zwischen Fördersystem und Seitenwand so groß ist, dass Ladegut oder Ladegut-Partikel vom Fördersystem nicht mitgenommen wird, sondern sich vielmehr zwischen Fördersystem und Seitenwand ablagert.

In einer bevorzugten Ausführungsform können die Seitenwände sich zudem in einer vertikalen Richtung vom Fahrzeugboden nach oben hin konisch erweitern. Der Laderaum weist dann insgesamt oder bereichsweise eine sowohl vertikale und als auch horizontale Konizität auf.

Aus der vertikalen Konizität resultiert ein zusätzlicher Freiraum, der den Einsatz großer Bereifungen ohne Überschreitung etwaiger gesetzlicher Vorschriften hinsichtlich einer Gesamt-Fahrzeugbreite erleichtert.

In einer bevorzugten Ausführung der Erfindung handelt es sich bei dem Fahrzeug, auf oder an das der Laderaum gekoppelt ist, um ein landwirtschaftliches Nutzfahrzeug, beispielsweise ein Streufahrzeug zur Ausbringung von Düngemitteln. Bei einigen landwirtschaftlichen Fahrzeugen, insbesondere bei Streufahrzeugen, können die Ziele "Einsatz einer großen Bereifung zur Schonung des Bodens" und "geringer Leistungsbedarf zum Betrieb des Transportbodens" miteinander konkurrieren. Insbesondere für solche Fahrzeuge schlägt die Erfindung eine geeignete Lösung vor, nämlich die genannte Kombination von vertikaler und horizontaler Konizität des Laderaums.

Das Fahrzeug kann eine Fördereinrichtung zum Transport des Schüttgutes oder der Biomasse in Richtung der heckseitigen Öffnung umfassen. Solche Fördereinrichtungen kommen beispielswiese dann zum Einsatz, wenn der Laderaum nicht gekippt werden kann oder soll. Die Fördereinrichtung fördert das Ladegut in Richtung Heck. Handelt es sich bei dem Fahrzeug beispielsweise um ein Streufahrzeug, so wird das Ladegut einem am Fahrzeugheck befindlichen Streuwerk zugeführt, von diesem erfasst und hinter dem Fahrzeug ausgebracht.

Wie bereits weiter oben beschrieben reduziert sich der Reibungswiderstand des Ladeguts an den Seitenwänden durch die horizontale Konizität. Als Konsequenz hieraus verbessert sich auch der Mitnahmeeffekt der Transporteinrichtung. Zudem wird die Gefahr reduziert, dass Ladegut sich zwischen den Seitenwänden festsetzt und die Transporteinrichtung unter dem Ladegut durchgezogen wird ohne das Ladegut mitzunehmen.

Bei der Fördereinrichtung kann es sich um ein den Boden des Fahrzeuges umlaufendes Fördersystem, beispielsweise eine umlaufende Förderkette oder ein umlaufendes Förderband handeln. Alternativ dazu ist auch der Einsatz einer Fördereinrichtung möglich, bei der eine vorzugsweise hydraulisch angetriebene Schubwand vorgesehen ist. Die Schubwand ist an die Breite und Höhe des Laderaums angepasst und befindet sich zunächst in einer Ausgangsstellung im Bereich der Laderaum-Vorderwand. Von dort wird sie im Arbeitseinsatz mittels eines ausreichend groß dimensionierten Hydraulikzylinders in Richtung Fahrzeugheck geschoben.

Die Integration der Konizität in die Seitenwand kann fertigungstechnisch auf unterschiedliche Arten erfolgen. In einer bevorzugten Ausführung sind zumindest die Seitenwände des Laderaums aus Stahlblech hergestellt, wobei in das Stahlblech Abkantungen zur Ausbildung der Konizität des Laderaumes eingebracht sind. Solche Abkantungen lassen sich fertigungstechnisch sehr kostengünstig und einfach herstellen. Zudem können die Seitenwände bei Verwendung geeigneter Abkant-Maschinen mit hoher Präzision hergestellt und nachfolgend sehr passgenau in den zu fertigenden Laderaum integriert werden. Gleichzeitig ist durch geschicktes Abkanten die untere Kante und/oder obere Innen- oder Außenkante der Seitenwand so herstellbar, dass sie sich im montierten Zustand des Fahrzeuges parallel zu dessen Mittellinie bzw. zur Mittellinie des Laderaums erstreckt.

Es versteht sich, dass alternativ zum Abkanten auch andere Fertigungsverfahren möglich sind. Beispielsweise kann eine Seitenwand mit einem in die Seitenwand integrierten konischen Bereich auch mit speziellen Form-Werkzeugen hergestellt werden. Auch das Verschrauben oder Verschweißen mehrerer Einzelteile zu einer Seitenwand ist möglich.

Welches Fertigungsverfahren zum Einsatz kommt, hängt von verschiedenen Randbedingungen ab, beispielsweise der zu fertigenden Stückzahl oder der für die Seitenwand vorgesehenen Materialart.

In einer bevorzugten Ausführung beträgt die Abmessung einer sich in horizontaler Richtung zur heckseitigen Öffnung hin erstreckenden konischen Erweiterung zwischen einer geringsten und einer größten Breite mindestens 1 cm und maximal 20 cm, vorzugsweise mindestens 1 cm und maximal 10 cm.

Die erfindungsgemäßen Laderäume sind grundsätzlich an sehr unterschiedlichen Fahrzeugen einsetzbar und in horizontaler Richtung in der Regel ca. 2 Meter bis ca. 15 Meter lang. Bereits eine geringfügige Konizität in horizontaler Richtung reduziert den durch das Verschieben der Ladung bedingten Reibwiderstand erheblich. Gleichzeitig soll jedoch der durch die Konizität bedingte Verlust an Laderaum-Kapazität gering gehalten werden. Insofern bildet eine horizontale Konizität von 1 cm bis 20 cm, vorzugsweise 1 cm bis 10 cm, ein Optimum aus. Entsprechend konzipierte Laderäume haben einerseits einen signifikant reduzierten Reibwiderstand und reduzieren andererseits das mögliche Ladevolumen nur unwesentlich.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein Fahrzeug mit einem in horizontaler und vertikaler Richtung konischen Laderaum in einer perspektivischen Ansicht;
- Fig. 2: zeigt das Fahrzeug gemäß Fig. 1 in einer Draufsicht;
- Fig. 3: zeigt das Fahrzeug gemäß Fig. 1 in einer Seitenansicht mit Schnittlinien A-A und B-B;
- Fig. 4: zeigt eine erste Schnittdarstellung des Fahrzeugs gemäß Fig. 1 auf Basis der in Fig. 3 dargestellten Schnittebene A-A;
- Fig. 5: zeigt eine zweite Schnittdarstellung des Fahrzeugs gemäß Fig. 1 auf Basis der in Fig. 3 dargestellten Schnittebene B-B;
- Fig. 6: zeigt das Fahrzeug gemäß Fig. 1 in einer Seitenansicht mit Schnittlinien A-A und B-B;
- Fig. 7: zeigt das Fahrzeug gemäß Fig. 1 in einer Draufsicht;
- Fig. 8: zeigt eine dritte Schnittdarstellung des Fahrzeugs gemäß Fig. 1 auf Basis der in Fig. 6 dargestellten Schnittebene C-C;
- Fig. 9: zeigt eine vierte Schnittdarstellung des Fahrzeugs gemäß Fig. 1 auf Basis der in Fig. 6 dargestellten Schnittebene D-D;
- Fig. 10: zeigt eine Seitenwand des Fahrzeuges gemäß Fig. 1 in einer perspektivischen Ansicht;
- Fig. 11: zeigt die Seitenwand gemäß Fig. 10 in einer nicht-perspektivischen Ansicht von der Seite;
- Fig. 12: zeigt die Seitenwand gemäß Fig. 10 in einer nicht-perspektivischen Ansicht aus einer in Fig. 11 dargestellten Blickrichtung E-E;
- Fig. 13: zeigt die Seitenwand gemäß Fig. 10 in einer Draufsicht
- Fig. 14: zeigt das Fahrzeug gemäß Fig. 1 in einer Seitenansicht mit Schnittlinien F-F, G-G und H-H;
- Fig. 15: zeigt eine erste Schnittdarstellung auf Basis der Schnittlinie F-F aus Fig. 14;
- Fig. 16: zeigt eine zweite Schnittdarstellung auf Basis der Schnittlinie G-G aus Fig. 14;
- Fig. 17: zeigt eine dritte Schnittdarstellung auf Basis der Schnittlinie H-H aus Fig. 14.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in den Figuren dargestellte Anordnung des Streufahrzeuges beziehungsweise dessen Komponenten.

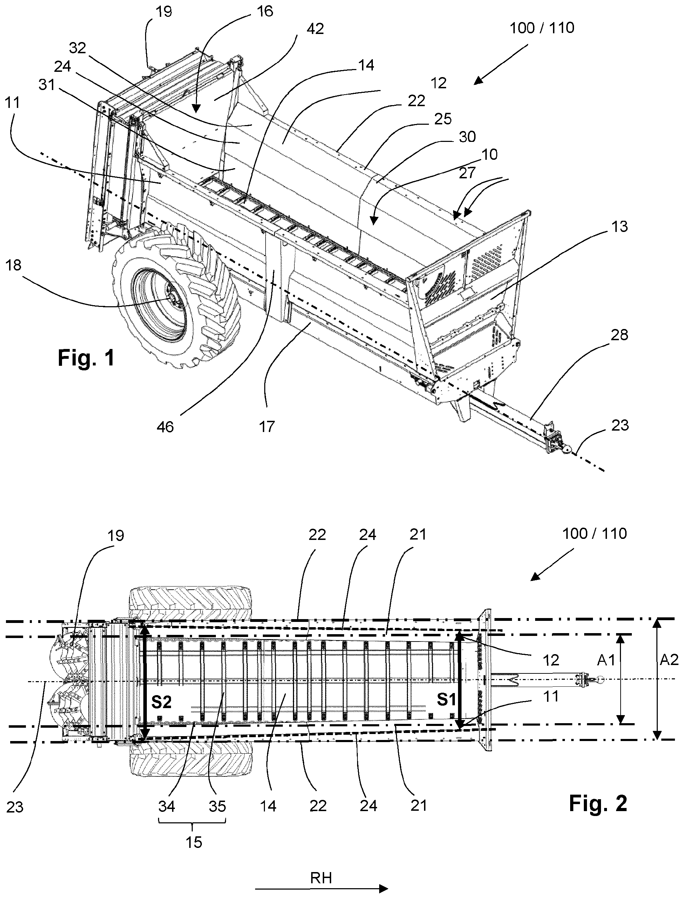

Figur 1 zeigt ein als Streufahrzeug 110 ausgebildetes Fahrzeug 100, das im Arbeitseinsatz von einem Zugfahrzeug, beispielsweise einem Traktor gezogen wird. Das Streufahrzeug 110 weist ein Fahrgestell 17 mit einer Deichsel 28 und einer Achse 18 auf. Auf dem Fahrgestell 17 befindet sich ein Laderaum 10 zur Aufnahme von auszubringendem Streugut. Der Laderaum 10 wird zu seinen Seiten hin durch eine Vorderwand 13, Seitenwände 11 und 12 sowie eine hintere Öffnung 16 ausgebildet. Die Seitenwände 11, 12 sind in ihrem mittleren Bereich durch Rungen 46 verstärkt. Im dargestellten Ausführungsbeispiel des Streufahrzeuges 110 schließt sich an die hintere Öffnung 16 des Laderaums 10 ein Stauschieber 42 und ein Streuwerk 19 an.

Die Seitenwände 11 und 12 bilden an ihrer Oberseite Auflageflächen 25 aus. Diese Auflageflächen 25 erstrecken sich keilförmig spitz zulaufend von der Vorderwand 13 bis zum Stauschieber 42. An ihrer dem Laderaum zugewandten Seite weisen die Auflageflächen 25 eine Innenkante 30 und an der nach außen gerichteten Seite eine Außenkante 22 auf. Im dargestellten Ausführungsbeispiel verläuft die Außenkante 22 parallel zu einer Mittellinie 23, die gleichzeitig die Mittelinie des Laderaums 10 und zudem auch die Mittellinie des gesamten Fahrzeuges 100 bildet. Alternativ zur Außenkante 22 könnte auch die Innenkante 30 der Auflageflächen 25 parallel zur genannten Mittellinie 23 verlaufen, so dass die keilförmige Form der Auflagefläche 25 durch die parallel zur Mittellinie 23 ausgerichtete Innenkante 30 und eine schräg ausgerichtete Außenkante 22 ausgebildet würde.

Fig. 2 zeigt das Fahrzeug 100 gemäß Fig. 1 in einer Draufsicht. Der Laderaum 10 weist einen Boden 14 mit einer Fördereinrichtung 15 auf. Im dargestellten Ausführungsbeispiel umfasst die Fördereinrichtung 15, der durch zwei den Boden 14 umlaufende Förderketten 34 gebildet werden. Die Förderketten 34 sind durch Förderleisten 35 aneinander gekoppelt. Die Transporteinrichtung 15 führt im Arbeitseinsatz im Laderaum 10 befindliches Streugut dem Streuwerk 19 zu. Dabei ist die Menge des dem Streuwerk 19 zugeführten Streuguts von der Fördergeschwindigkeit der Fördereinrichtung 15 sowie der Höheneinstellung des Stauschiebers 42 abhängig.

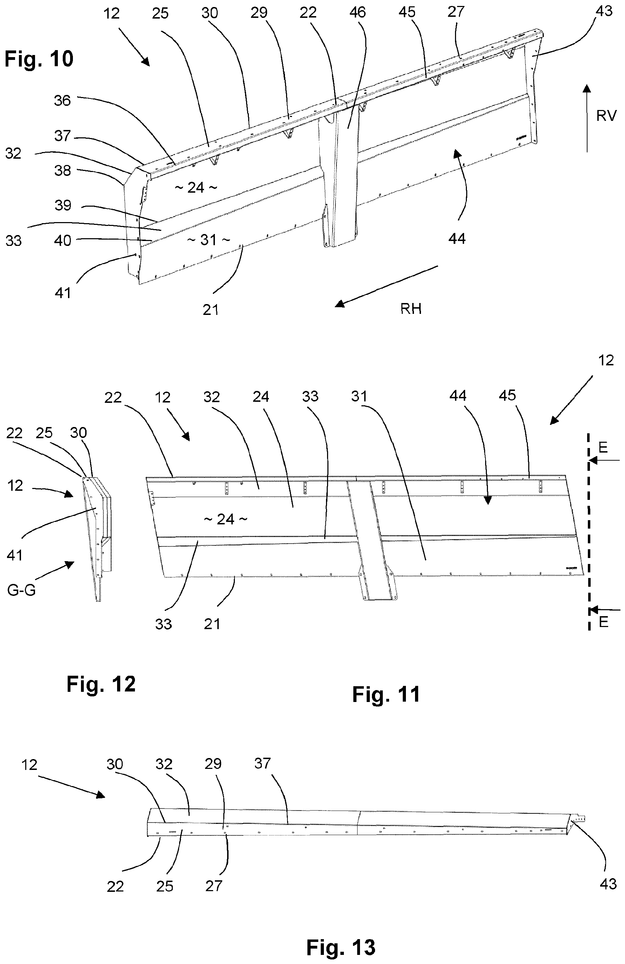

Der Laderaum 10 weist zum einen in einer vertikalen Richtung RV und zum anderen in einer horizontalen Richtung RH jeweils eine konische Erweiterung auf. Diese doppelte konische Erweiterung wird durch eine spezielle Ausbildung der Seitenwände 11 und 12 realisiert und zu einem späteren Zeitpunkt im Zusammenhang mit den Ausführungen zu den Figuren 10 bis 15 näher erläutert.

Figur 2 verdeutlicht das Prinzip der doppelten konischen Erweiterung durch Hervorheben der insofern relevanten Konturen. Die Seitenwände 11 und 12 umfassen jeweils an ihrer Unterseite eine untere Kante 21. Die Kante 21 wird im dargestellten Ausführungsbeispiel durch die Blechstärke des Wandungsblechs 44 der Seitenwände 11, 12 ausgebildet. Zwischen den unteren Kanten 21 und der Auflage 25 umfasst das Wandungsblech 44, und damit die Seitenwand 11, 12 insgesamt, einen sich konisch in horizontaler Richtung RH erstreckenden Bereich 24. Die durch die Konizität in horizontaler Richtung RH bedingte Verjüngung wird durch die keilförmige Form der Auflagefläche 25 kompensiert. Im vorderen Bereich der Seitenwand, also da wo sie an die Stirnwand anschließt, ist der Laderaum 10 schmaler als da, wo die Seitenwand 11, 12 an den Stauschieber 42 anschließt. Um dies zu kompensieren, ist die Auflagefläche 25 im vorderen Bereich relativ breit und verjüngt sich in Richtung Stauschieber 42.

Die Auflagefläche 25 ist somit zwar keilförmig, unabhängig davon umfasst sie jedoch Aufnahmen, beispielsweise Bohrungen 27, die kompatibel zu entsprechenden Aufnahmen an Standard-Bordwandaufsätzen (nicht dargestellt) sind, so dass ein Fahrzeug mit konischer Behälterform und ein Fahrzeug mit nicht-konischer Behälterform an der Koppelstelle zu den Bordwandaufsätzen kompatibel zueinander und in beiden Fällen die gleichen Bordwandaufsätze montierbar sind.

In Fig. 2 sind die unteren Kanten 21 und die Außenkanten 22 der Auflagefläche 25 sowie die Kontur des Bereiches 24 in eine Ebene projiziert. Zur besseren Veranschaulichung sind Lage und Ausrichtung der unteren und oberen Kanten 21, 22 durch zusätzliche Strichpunktlinien hervorgehoben. Da ein Abstand A1 der am Boden 14 des Fahrzeuges 100 befindlichen unteren Kanten 21 zueinander kleiner ist als ein Abstand A2 der an der Oberseite der Seitenwände 11, 12 befindlichen oberen Außenkanten 22, ergibt sich, dass die Seitenwände 11, 12 in vertikaler Richtung RV konisch zueinander angeordnet sind und sich somit vom Boden 14 nach oben hin erweitern.

Zudem umfassen die Seitenwände 11, 12 zwischen ihrer jeweils unteren Kante 21 und ihrer oberen Außenkante 22 den Bereich 24. Die Lage und Ausrichtung des Bereiches 24 ist analog zur Lage der unteren Kanten 21 und der oberen Außenkanten 22 ebenfalls hervorgehoben, und zwar durch zwei gestrichelte Linien. Der Bereich 24 ist in horizontaler Richtung konisch ausgebildet und erweitert sich in Richtung Streuwerk 19 von einem kleinsten Maß S1 zu einem größten Maß S2. Im dargestellten Ausführungsbeispiel erstreckt sich der Bereich 24 im Wesentlichen jeweils über die kompletten Seitenwände 11 und 12.

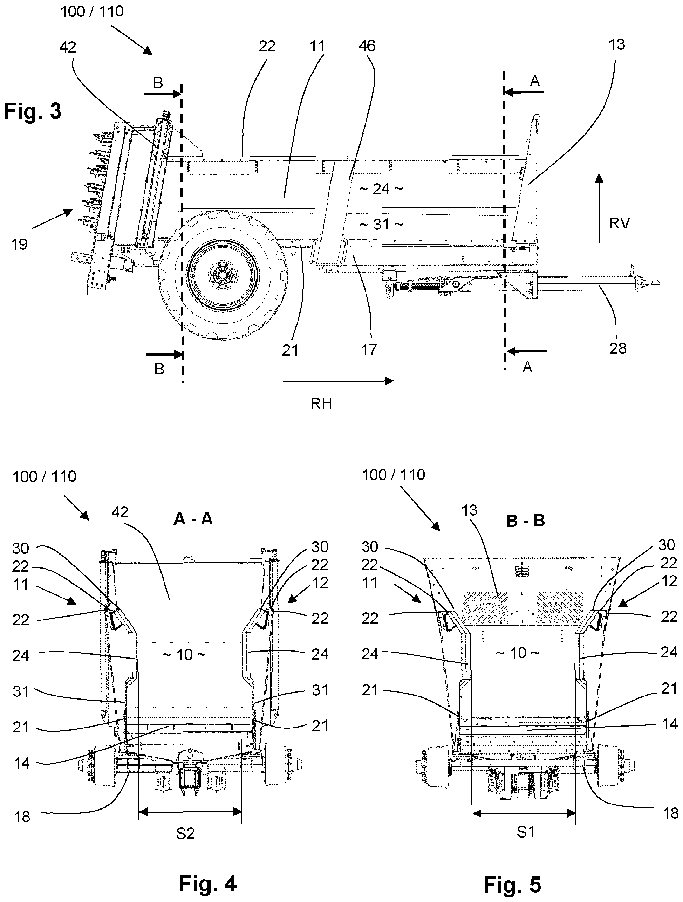

Wie die Figuren 2 und 3 zeigen, ist das im Ausführungsbeispiel gezeigte Fahrzeug 100 sowohl in vertikaler Richtung RV als auch in horizontaler Richtung RH teilweise, nämlich in den Bereichen 24, 32, 33 der Seitenwände 11 und 12 konisch ausgebildet. Der untere Bereich 31 der Seitenwände 11, 12 ist dagegen weder in horizontaler Richtung RH noch in vertikaler Richtung RV konisch, sondern erstreckt sich parallel zur Mittellinie 23.

Unabhängig davon, ob das Fahrzeug 100 eine Fördereinrichtung 15 oder eine Kippvorrichtung (nicht dargestellt) umfasst, erfolgt die Entladung des Fahrzeuges 100 durch die heckseitige Öffnung 16. Das Ladegut wird somit zur Entladung grundsätzlich in Richtung der Öffnung 16 bewegt. Bei einem Fahrzeug 100 mit einer umlaufenden Fördereinrichtung 15 ist es vorteilhaft, wenn die Seitenwände 11, 12 sich in ihrem unteren Bereich 31 parallel zur Mittellinie 23 erstrecken. In diesem Fall ist der Abstand zwischen der den Boden 14 umlaufenden Fördereinrichtung 15 und den Seitenwänden 11, 12 über die Länge des Laderaums 10 konstant. Dies ist günstig, da der Boden 14 dann gleichmäßig von der umlaufenden Fördereinrichtung umlaufen wird und sich, im Gegensatz zu einer Nichtparallelen, insbesondere konischen Ausrichtung der Seitenwände 11, 12, keine keilförmigen Bereiche ausbilden, die von der Fördereinrichtung nicht überstrichen werden.

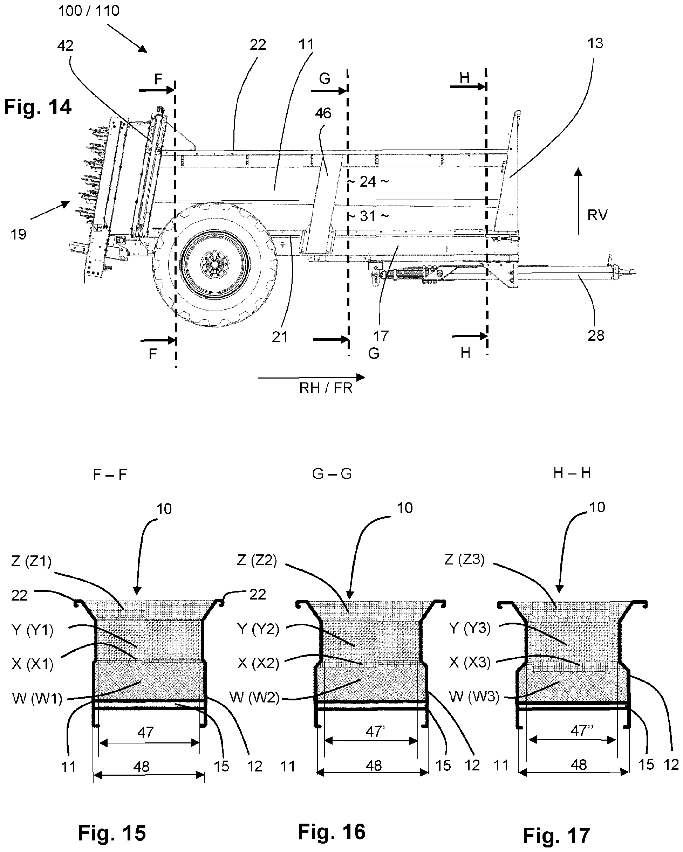

Wie weiter oben schon erwähnt, reduziert bereits eine geringfügige Erweiterung bzw. Konizität in horizontaler Richtung RH zur hinteren Öffnung 16 den durch das Verschieben der Ladung bedingten Reibwiderstand erheblich. Gleichzeitig soll der durch die Konizität bedingte Verlust an Laderaum-Kapazität gering gehalten werden. Die Konizität des Aufbaus, insbesondere eine Konizität sowohl in vertikaler Richtung RV als auch in horizontaler Richtung RH bedingt jedoch Nachteile im Hinblick auf die Montagefreundlichkeit und die universelle Einsetzbarkeit der Bauteile. Um das Fahrzeug 100 zum einen widerstandsarm entladen zu können und zum anderen die benötigten Bauteile möglichst universell einsetzbar und montagefreundlich zu gestalten, macht sich die Erfindung den Grundgedanken zu Nutze, dass es im Hinblick auf die Reduktion des Reibwiderstandes bei der Entladung ausreichend ist, den Laderaum 10 lediglich in bestimmten Bereichen konisch auszuführen. Der in bestimmten Teilbereichen konisch ausgeführte Laderaum 10 des Fahrzeuges 100 ist zur besseren Veranschaulichung in den Figuren 15 bis 17 nicht-maßstäblicher dargestellt und wird im Zusammenhang mit der Beschreibung zu diesen Figuren näher erläutert.

Figur 3 zeigt das Fahrzeug 100 gemäß Fig. 1 in einer Seitenansicht mit vertikalen Schnittlinien A-A und B-B. Die Figuren 4 und 5 zeigen die entsprechenden Schnittdarstellungen, jedoch ohne Räder und Streuwerk 19.

Die Seitenwände 11, 12 bilden einen im Wesentlichen quaderförmigen Laderaum 10 aus, der jedoch horizontal und vertikal konische Bereiche umfasst. Im dargestellten Ausführungsbeispiel beträgt die Konizität in horizontaler Richtung RH zwischen einer in Fig. 5 (Schnittebene B-B) dargestellten Breite S1 und einer in Fig. 4 (Schnittebene A-A) dargestellten Breite S2 10 cm. Unterhalb des Bereiches 24 erstreckt sich ein Bereich 31, der in horizontaler Richtung RH parallel zur Mittellinie 23 angeordnet ist. Die zur Mittellinie 23 parallele Kontur des Bereiches 31 erleichtert zum einen die Montage und den Anbau von Bauteilen, die sich nach unten hin an die Seitenwände 11, 12 anschließen. Weiterhin ergibt sich aus dem zur Mittellinie 23 parallelen Verlauf ein gleichbleibender Abstand der Bereiches 31 der Seitenwand 11, 12 zu der zwischen den Seitenwänden 11, 12 angeordneten Fördereinrichtung 15.

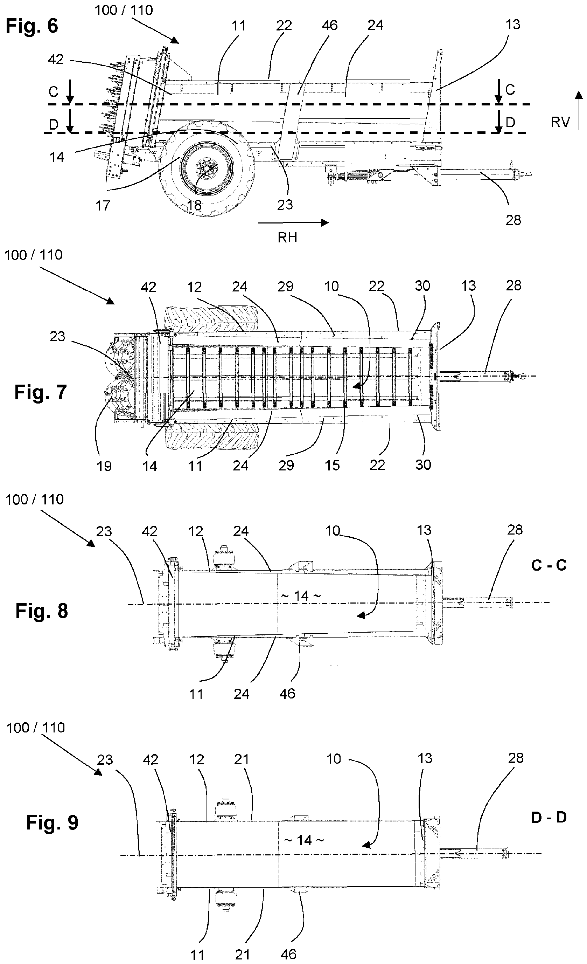

Figur 6 zeigt analog zu Fig. 3 das Fahrzeug 100 gemäß Fig. 1 in einer Seitenansicht, allerdings mit horizontalen Schnittlinien C-C und D-D. Figur 7 zeigt eine Draufsicht des Fahrzeuges. Die Figuren 8 und 9 zeigen die horizontalen Schnitte C-C und D-D, wobei zur besseren Übersichtlichkeit auf die Darstellung von Streuwerk 19, Fördereinrichtung 15 und Rädern verzichtet wurde.

In Fig. 7 ist zu erkennen, dass der Bereich 24 der Seitenwände 11 und 12 sich nach innen in den Laderaum 10 wölbt. Der Laderaum 10 ist in horizontaler Richtung RH konisch ausgeformt und verbreitert sich in dem durch die Bereiche 24 begrenzten Teil des Laderaumes 10 in Richtung Heck bzw. Stauschieber 42. Der Stauschieber 42 begrenzt die hintere Öffnung 26 des Laderaums 10. Weiterhin ist in Fig. 7 ein Oberrand 29 der Seitenwände 11, 12 zu erkennen. Dieser Oberrand 29 weist an seiner dem Laderaum 10 abgewandten Seite die obere Außenkante 22 und an seiner zum Laderaum 10 weisenden Seite eine Innenkante 30 auf. Der Oberrand 29 hat insgesamt eine keilförmige Struktur, die im Bereich der Vorderwand 13 breiter ist als am anderen Ende der Seitenwand 11, 12, also an der an den Stauschieber 42 angrenzenden Seite. Die oberen Außenkanten 22 der Seitenwände 11, 12 erstrecken sich parallel zur Mittellinie 23, während die Innenkanten 30 der beiden Seitenwände 11, 12 in einem spitzen Winkel aufeinander zulaufen.

Die keilförmige Struktur des Oberrandes 29 kompensiert vereinfacht gesagt die sich aus der horizontalen Konizität des Bereiches 24 ergebende Verformung der Seitenwände 11, 12.

Der Schnitt C-C gemäß Fig. 8 liegt unterhalb des Oberrandes 29 der Seitenwände 11, 12 und zwar im Bereich 24. Der Oberrand 29 der Seitenwände ist somit nicht mehr sichtbar und es ist ein Blick auf den unteren Teil des Bereiches 24 freigegeben. Bei diesem Schnitt durch den Bereich 24 ist gut zu erkennen, dass der Bereich 24 sich in Richtung Stauschieber 42 konisch verbreitert.

Der Schnitt D-D gemäß Fig. 9 liegt unterhalb des Bereiches 24 der Seitenwände 11, 12. Der Bereich 24 - und damit auch die horizontale Konizität des Bereiches 24 - ist in der Schnittdarstellung D-D nicht mehr sichtbar. Es ist jedoch zu erkennen, dass sich, analog zur oberen Außenkante 22, auch die untere Kante 21 parallel zur Mitteillinie 23 erstreckt.

Figur 10 zeigt die Seitenwand 12 des Fahrzeuges 10 gemäß Fig. 1 in einer perspektivischen Ansicht. Die Seitenwand 12 ist spiegelsymmetrisch zur Seitenwand 11 ausgebildet und aus einem Stahlblech hergestellt. Die Seitenwand 12 umfasst im dargestellten Ausführungsbeispiel als zentrales Bauteil ein Wandungsblech 44, ein vorderes Abschlussblech 41, ein hinteres Abschlussblech 43 und eine Runge 46. Der zunächst flache Blechzuschnitt des Wandungsblechs 44 ist durch Abkantungen 36, 37, 38, 39 und 40 zu einem räumlichen Körper verformt worden. Weiterhin befindet sich an der Oberseite der Seitenwand 11, 12 eine Auflagefläche 25 mit einer Außenkante 22 und einer zum Laderaum weisenden Innenkante 30. Die Auflagefläche umfasst zudem Bohrungen 27, die zur Anbringung eines Bordwand-Aufsatzes (nicht dargestellt) dienen.

Die erste Abkantung 36 grenzt eine sich im montierten Zustand der Seitenwand 12 vertikal nach unten erstreckende Abschlusskante 45 gegen den sich horizontal erstreckenden Oberrand 29 ab. Der Oberrand 29 verjüngt sich keilförmig. Die zweite Abkantung 37 grenzt den Oberrand 29 von einem sich nach schräg unten erstreckenden Bereich 32 ab. Der Bereich 32 ist somit im montierten Zustand in vertikaler Richtung RV konisch ausgeformt. Die dritte Abkantung 38 grenzt den vertikal konischen Bereich 32 vom horizontal konischen Bereich 24 ab. Die vierte Abkantung 39 grenzt den horizontal konischen Bereich 24 von einem Bereich 33 ab. Dieser Bereich 33 ist ebenfalls keilförmig ausgebildet und reicht bis zur fünften Abkantung und damit bis an einen unteren Bereich 31, der vertikal ausgerichtet ist und die untere Kante 21 umfasst. Wie bereits weiter oben erwähnt, ist die untere Kante 21 und damit auch der untere Bereich 31 insgesamt parallel zur Mittellinie 23 ausgerichtet.

Im Ergebnis ergibt sich somit durch konstruktiv geschicktes Abkanten ein Wandungsblech 44, in welches einerseits eine horizontale und vertikale Konizität integriert ist und das andererseits an wenigstens einer Kante 21, 22, 30 parallel zur Mittellinie 23 ausgerichtet ist. Die Seitenwände 11, 12 mit der beschriebenen Konizität in horizontaler Richtung RH sind somit vereinfacht gesagt kompatibel zu nicht konischen oder nur in Richtung RV konischen Seitenwänden. Somit wird trotz konischer Seitenwände 11, 12 die Anbindung der Seitenwände 11, 12 an weitere Bauteile erheblich erleichtert.

Alternativ zu den im dargestellten Ausführungsbeispiel vorgesehenen Abkantungen 36, 37, 38, 39 und 40 können auch andere Abkantungen vorgesehen sein. Somit können sich die von Abkantungen begrenzten Bereiche im montierten Zustand planparallel zur Mittellinie 23 des Laderaums 10 vertikal konisch, horizontal konisch oder auch kombiniert vertikal und horizontal konisch erstrecken. Allen Ausführungsformen gemeinsam ist, dass die Seitenwände 11, 12 dem Laderaum 10 im montierten Zustand eine Kontur verleihen, die sowohl vertikal konische als auch horizontal konische Bereiche umfasst.

Es versteht sich, dass die im Ausführungsbeispiel beschriebene Ausführungsform beispielhaft zu verstehen ist und das Grundprinzip der Erfindung, insbesondere die Ausbildung eines Laderaums mit sowohl horizontal als auch vertikal konischen Bereichen, auch durch andere konstruktive Auslegungen realisierbar ist.

Fig. 11 zeigt die Seitenwand 12 gemäß Fig. 10 in einer nicht-perspektivischen Ansicht. von der Seite. Da der Bereich 33 und die Auflagefläche keilförmig ausgebildet sind, kann hierdurch die Konizität des Bereiches 24 in horizontaler Richtung RH ausgeglichen werden.

Fig. 12 zeigt die Seitenwand 11 gemäß Fig. 10 aus der in Fig. 11 dargestellten Blickrichtung E-E in einer Seitenansicht, Fig 13 zeigt die Seitenwand 12 in einer Draufsicht.

Die Figuren 14 bis 17 veranschaulichen die Funktionsweise der Erfindung anhand von im Laderaum 10 ausgebildeter unterschiedlicher virtueller Ladungsbereichen W, X, Y und Z. Dabei handelt es sich bei den Figuren 15 bis 17 um schematische Darstellungen, die lediglich die durch Seitenwände 11, 12 und Fördereinrichtung 15 ausgebildete Kontur des Fahrzeuges 100 in Form schematischer Schnittdarstellungen zeigen. Im Hinblick auf die in der Realität teilweise sehr kleinen Konizitäten sind die Bereiche W, X, Y und Z zudem nicht maßstäblich dargestellt.

In Abhängigkeit von dem für das Fahrzeug 100 vorgesehenen Anwendungsfall kann es ausreichend sein, in horizontaler Richtung RH bei einer Laderaumlänge von beispielweise sechs Metern eine Konizität von beispielsweise lediglich 25 mm je Seitenwand vorzusehen. Auch bei geringer Konizität reduziert sich der Reibungswiderstand bereits signifikant. Um die für das Fahrzeug 100 in horizontaler und vertikaler Richtung vorzugsweise bereichsweise vorgesehenen Konizitäten besser zu veranschaulichen, sind diese Koniziäten in den Figuren 15 bis 17 nicht maßstäblich dargestellt.

Die Fig. 14 zeigt das Fahrzeug 100 gemäß Fig. 1 in einer Seitenansicht mit:
- einer in Fahrtrichtung FR gesehen im vorderen Bereich des Laderaums 10 befindlichen Schnittlinie H-H,
- einer im mittleren Bereich des Laderaums 10 befindlichen Schnittlinie G-G und
- einer im hinteren Bereich des Laderaums 10 befindlichen Schnittlinie F-F.

Bei der schematisch vereinfachten Darstellung gemäß der Figuren 15 bis 17 umfasst der Laderaum 10 einen oberen Ladungsbereich Z, zwei mittlere Ladungsbereiche X und Y und einen unteren Ladungsbereich W.

Fig. 15 zeigt die Ladungsbereiche W, X, Y und Z in einer Ansicht von vorne entlang der Schnittlinie F-F. Die durch den Schnitt F-F ausgebildeten Flächen der Ladungsbereiche sind als W1, X1, Y1 und Z1 benannt. Analog dazu sind die Flächen der Ladungsbereiche W, X, Y und Z entlang der Schnittlinie G-G (vgl. Fig. 16) als W2, X2, Y2 und Z2 und entlang der Schnittlinie H-H (Fig. 17) als W3, X3, Y3 und Z3 benannt.

In der nichtmaßstäblichen Darstellung der Figuren 15 bis 17 ist zu erkennen, dass die Flächen W1, W2 und W3 jeweils gleich groß sind. Hieraus ergibt sich, dass der Ladungsbereich W weder in horizontaler Richtung RH noch in vertikaler Richtung RV konisch, sondern vielmehr insgesamt quaderförmig ausgebildet ist. Ein solcher im unteren Bereich W quaderförmig ausgebildeter Laderaum ist besonders dann vorteilhaft, wenn das Fahrzeug 100 eine im Bereich des Bodens 14 befindliche Fördereinrichtung 15 umfasst. Handelt es sich bei der Fördereinrichtung 15 beispielsweise um eine den Boden 14 umlaufende Fördereinrichtung - wie ein Förderband oder ein Kratzboden - ist der Seitenabstand zwischen der Fördereinrichtung 15 und den Seitenwänden 11, 12 über die Länge des Laderaums 10 gesehen überall gleich groß.

Weiterhin ist in den Figuren 15 bis 17 zu erkennen, dass die Flächen X1, X2 und X3 sich in Richtung Laderaum-Boden 14 von einer oberen Breite 47, 47` und 47" zu einer unteren Breite 48 konisch erweitern. Soweit es sich bei dem im Laderaum 10 befindlichen Ladegut um Schüttgut handelt, hat dieses die Tendenz, bedingt durch das Eigengewicht und/oder durch Erschütterungen bei Transportfahrten abzusacken und sich zu setzen. Durch solche Setz-Eigenschaften des Ladeguts kann sich der Reibwiderstand zwischen Ladegut und Seitenwand 11, 12 so stark erhöhen, dass das Ladegut bei einem Fahrzeug mit Kippvorrichtung und angekipptem Laderaum nur schwer oder gar nicht Richtung Entladeöffnung 16 rutscht. Bei einem Fahrzeug 10 mit einem Förderboden besteht die Gefahr, dass das Ladegut die Fördereinrichtung 15 blockiert oder die Fördereinrichtung 15 ohne Mitnahme von Ladegut unter dem verfestigten Ladegut hindurchgezogen wird. Die durch den Ladungsbereich X realisierte konische Erweiterung vom Ladungsbereich Y hin zum Ladungsbereich W wirkt den negativen Setzerscheinungen entgegen: Durch die konische Erweiterung vergrößert sich der Ladungsbereich W und in diesen Bereich absackendes Erntegut wird weniger stark verfestigt oder sogar entspannt.

Der Ladungsbereich X ist in zweifacher Hinsicht konisch ausgebildet:
- In vertikaler Richtung RV weist der Ladungsbereich X trapezförmige Flächen X1, X2, X3 auf, deren obere Breite 47, 47`, 47" kleiner ist als die untere Breite 48.
- In horizontaler Richtung RH verbreitert sich der Ladungsbereich X konisch Richtung Fahrzeugheck. In den Figuren 15 bis 17 ist diese Verbreiterung daran zu erkennen, dass die obere Breite 47 des Ladungsbereiches X1 (Fig. 15) größer ist als die obere Breite 47' des Ladungsbereiches X2 (Fig. 16) und diese wiederum größer ist als die obere Breite 47" des Ladungsbereiches X3.

Der Ladungsbereich X verbreitert sich also in vertikaler Richtung RV Richtung Boden 14 und analog dazu in horizontaler Richtung RH über die Länge des Laderaums 10 Richtung der hinteren Laderaumöffnung 16. Der Ladungsbereich X bildet einen Übergang vom Ladungsbereich Y zum Ladungsbereich W aus.

Der Ladungsbereich Y ist lediglich in horizontaler Richtung konisch. Er ist im in Fahrtrichtung gesehen vorderen Bereich des Fahrzeuges relativ schmal (vgl. Fläche Y3 in Fig 17) und erweitert sich in Richtung Fahrzeugheck bzw. Öffnung 16. Die konische Erweiterung ist an den jeweils breiter werdenden Flächen Y2 (Fig. 16) und Y1 (Fig. 15) zu erkennen.

Analog dazu erweitert sich auch der Ladungsbereich Z konisch in Richtung Fahrzeugheck. Im Bereich des Schnittes H-H weist der Ladungsbereich Z eine relativ schmale trapezförmige Fläche Z3 (Fig 17) auf, die sich über eine etwas breiter trapezförmige Fläche Z2 (Fig. 16) zu der noch breiteren Fläche Z1 (Fig. 15) erweitert. Wie in den Figuren 15 bis 17 gut zu erkennen ist, ist der Ladungsbereich Z zudem auch in vertikaler Richtung RV konisch ausgebildet und erweitert sich nach oben hin. Der Ladungsbereich Z weist somit eine Konizität sowohl in vertikaler Richtung RV als auch in horizontaler Richtung RH auf.

Die konische Erweiterung der Ladungsbereiche X, Y und Z in Richtung Fahrzeugheck bewirkt eine signifikante Reduktion des Reibwiderstandes beim Entladen des Fahrzeuges 10.

Die Konizität in vertikaler Richtung RV reduziert den mit der Konizität in horizontaler Richtung einhergehenden Verlust an Ladungsraum.

Bei dem dargestellten Ausführungsbeispiel sind die oberen Außenkanten der Seitenwände 11, 12 parallel zur Fahrzeuglängsachse ausgeführt. Die oberen Außenkanten der Seitenwände 11, 12 begrenzen somit eine Rechteckkontur. Diese Rechteckkontur trägt zum einen dazu bei, dass die Seitenwände einfach montierbar sind. Zum anderen erleichtert sie den Anbau von oberen Anbauteilen, wie Schutzleisten und reduziert die Variantenvielfalt der für unterschiedliche Fahrzeuge 100 vorgesehenen Seitenwände und Anbauteile. Insbesondere zur fertigungstechnischen Vereinfachung kann aber auch vorgesehen sein, dass die oberen Außenkanten der Seitenwände 11, 12 nicht parallel, sondern konisch zur Mittellinie 23 ausgeführt sind.

### Bezugszeichenliste

- 10: Laderaum
- 11: Seitenwand
- 12: Seitenwand
- 13: Vorderwand
- 14: Boden
- 15: Fördereinrichtung
- 16: Öffnung
- 17: Fahrzeugrahmen
- 18: Achse
- 19: Streuwerk
- 20: Funktionseinheit
- 21: untere Kante (von 11, 12)
- 22: obere Außenkante (von 11, 12)
- 23: Mittellinie (von 10)
- 24: Bereich
- 25: Auflagefläche
- 27: Bohrung (in 25)
- 28: Deichsel
- 29: Oberrand
- 30: obere Innenkante (von 11, 12)
- 31: Bereich
- 32: Bereich
- 33: Bereich
- 34: Förderkette
- 35: Förderleiste
- 36: erste Abkantung
- 37: zweite Abkantung
- 38: dritte Abkantung
- 39: vierte Abkantung
- 40: fünfe Abkantung
- 41: vorderes Abschlussbleich
- 42: Stauschieber
- 43: hinteres Abschlussblech
- 44: Wandungsblech
- 45: Abschlusskante
- 46: Runge
- 47, 47`, 47": obere Breite (von Ladungsbereich X)
- 48: untere Breite (von Ladungsbereich X)

- 100: Fahrzeug
- 110: Streufahrzeug

- A1: Abstand
- A2: Abstand
- A - A: Schnitt
- B - B: Schnitt
- C - C: Schnitt
- D - D: Schnitt
- E - E: Schnitt
- G - G: Schnitt
- H - H: Schnitt
- I - I: Schnitt
- FR: Fahrtrichtung
- S1: erste Breite
- S2: zweite Breite
- RH: horizontale Richtung
- RV: vertikale Richtung
- W: unterer Ladungsbereich
- X: erster mittlerer Ladungsbereich
- Y: zweiter mittlerer Ladungsbereich
- Z: oberer Ladungsbereich
- W1, W2, W3: Ladungsbereiche
- X1, X2, X3: Ladungsbereiche
- Y1, Y2, Y3: Ladungsbereiche
- Z1, Z2, Z3: Ladungsbereiche

## Patentansprüche

1. Fahrzeug (100) mit einem Laderaum (10), wobei der Laderaum (10) zur Aufnahme von Schüttgut oder Biomasse vorgesehen ist, umfassend:
- einen Boden (14), eine Vorderwand (13), zwei Seitenwände (11, 12) sowie eine heckseitige Öffnung (16) und
- eine an der heckseitigen Öffnung (16) angebrachte Klappe oder Funktionseinheit (20) zur Ausbringung des Schüttguts oder der Biomasse,
**dadurch gekennzeichnet, dass**
der Laderaum (10) in vertikaler Richtung (RH) gesehen einen unteren Ladungsbereich (W) und einen an den unteren Ladungsbereich (W) anschließenden ersten mittleren Ladungsbereich (X) umfasst und der erste mittlere Ladungsbereich (X) sich zum unteren Ladungsbereich (W) von einer ersten Breite (47, 47`, 47") zu einer zweiten Breite (48) erweitert, so dass die erste Breite (47, 47`, 47") für in den Laderaum (10) eingefülltes Ladegut eine Engstelle bildet, nach deren Passieren das Ladegut in den auf die zweite Breite (48) erweiterten Bereich (W) gelangt.

2. Fahrzeug (100) mit einem Laderaum (10) nach Ansprüche 1, **dadurch gekennzeichnet, dass** sich die Seitenwände (11, 12) in horizontaler Richtung (RH) in einem an den Boden (14) des Fahrzeuges (100, 110) angrenzenden Bereich parallel zueinander erstrecken.

3. Fahrzeug (100) mit einem Laderaum (10) nach einem der Ansprüche 1 oder 2, **dadurch gekennzeichnet, dass** der Laderaum (10) einen weiteren Ladungsbereich (Y, Z) umfasst, und wenigstens einer der Ladungsbereiche (W, X, Y, Z) in vertikaler Richtung (RV) konisch ausgeführt ist.

4. Fahrzeug (100) mit einem Laderaum (10) nach einem der Ansprüche 1 bis 3, **dadurch gekennzeichnet, dass** sich wenigstens einer der Ladungsbereiche (W, X, Y, Z) in horizontaler Richtung (RH) zu einer zur Entladung am Fahrzeug (100) vorgesehenen Öffnung (16) konisch erweitert.

5. Fahrzeug (100) mit einem Laderaum (10) nach einem der Ansprüche 1 bis 4, **dadurch gekennzeichnet, dass** wenigstens ein Ladungsbereich (W, X, Y, Z) in vertikaler Richtung (RV) und wenigstens ein anderer Ladungsbereich (W, X, Y, Z) in horizontaler Richtung (RH) konisch ausgebildet ist.

6. Fahrzeug (100) mit einem Laderaum (10) nach einem der Ansprüche 1 bis 5, **dadurch gekennzeichnet, dass** wenigstens ein Ladungsbereich (W, X, Y, Z) sowohl in horizontaler Richtung (RH) als auch in vertikaler Richtung (RV) konisch ausgebildet ist.

7. Fahrzeug (100) mit einem Laderaum (10) nach einem der Ansprüche 1 bis 6, **dadurch gekennzeichnet, dass**
- wenigstens eine Seitenwand (11, 12) einen konisch ausgebildeten Bereich (24) umfasst
- und die Seitenwand (11, 12) eine untere Kante (21) und/oder eine obere Kante (22, 30) aufweist, wobei wenigstens eine der Kanten (21, 22, 30) im montierten Zustand des Fahrzeuges parallel zu einer Mittellinie (23) des Laderaum (10) verläuft.

8. Fahrzeug (100) mit einem Laderaum (10) nach einem der Ansprüche 1 bis 7, **dadurch gekennzeichnet, dass** die Seitenwand (11, 12) sich in horizontaler Richtung (RH) und/oder in vertikaler Richtung (RV) konisch erweitert.

9. Fahrzeug (100) mit einem Laderaum (10) nach einem der Ansprüche 1 bis 8, **dadurch gekennzeichnet, dass** es sich bei dem Fahrzeug (100) um ein landwirtschaftliches Nutzfahrzeug, beispielsweise um ein Streufahrzeug (110) zur Ausbringung von Düngemitteln handelt.

10. Fahrzeug (100) mit einem Laderaum (10) nach einem der Ansprüche 1 bis 9, **dadurch gekennzeichnet, dass** das Fahrzeug (100) eine Fördereinrichtung (15) zum Transport von Ladegut in Form von Schüttgut oder Biomasse in Richtung der heckseitigen Öffnung (16) umfasst.

11. Fahrzeug (100) mit einem Laderaum (10) nach Anspruch 10, **dadurch gekennzeichnet, dass** es sich bei der Fördereinrichtung (15) um ein den Boden (14) umlaufendes Fördersystem, beispielsweise mit Förderleisten (35) besetzte umlaufende Förderketten (34) oder um ein umlaufendes Förderband handelt oder, dass als Fördereinrichtung (15) eine vorzugsweise hydraulisch angetriebene Schubwand vorgesehen ist.

12. Fahrzeug (100) mit einem Laderaum (10) nach einem der Ansprüche 1 bis 11, **dadurch gekennzeichnet, dass** die Seitenwände (11, 12) aus Stahlblech hergestellt sind und eine oder mehrere Abkantungen (36, 37, 38, 39, 40) zur Ausbildung der Konizität des Laderaumes (10) umfassen.

13. Fahrzeug (100) mit einem Laderaum (10) nach einem der Ansprüche 1 bis 12, **dadurch gekennzeichnet, dass** die sich in horizontaler Richtung (RH) zur heckseitigen Öffnung (16) hin erstreckende konische Erweiterung eine geringste Breite (S1) und eine größte Breite (S2) aufweist und die Differenz zwischen der geringsten Breite (S1) und der größten Breite (S2) mindestens 1 cm und maximal 10 cm beträgt.
